# EUROPÄISCHE PATENTANMELDUNG

(11) **EP 1 228 699 A1**
(43) Veröffentlichungstag der Anmeldung: **07.08.2002**
(21) Anmeldenummer: 02001069.0
(22) Anmeldetag: 22.01.2002
(51) Int. Cl.: A23K 1/16, A23K 1/18

(54) **Sorbinsäurepräparat als Futtermittelzusatz in der Nutztieraufzucht**

(30) Priorität: 02.02.2001 DE 10105305
(71) Anmelder: Nutrinova Nutrition Specialties & Food Ingredients GmbH, 65929 Frankfurt am Main (DE)
(72) Erfinder: Raczek, Nico, Dr., 65779 Kelkheim (DE); Ter Meer, Hans-Ulrich, Dr., 60431 Frankfurt (DE)
(74) Vertreter: Schweitzer, Klaus, Dr.

(57) **Zusammenfassung**

Die vorliegende Erfindung betrifft ein Präparat zum Einsatz in Tierfuttermitteln. Das Präparat enthält Sorbinsäure und mindestens ein NDS. Weiterhin betrifft die Erfindung die Verwendung des Präparates allein in Futtermitteln oder in Abmischung mit anderen Futtermittelzusatzstoffen zur Verbesserung des hygienischen Status des Futters und zur Leistungsförderung in der Nutztieraufzucht.

## Beschreibung

Die Erfindung betrifft ein Präparat, welches Sorbinsäure und mindestens ein unverdauliches Saccharid (= NDS = Non-Digestible-Saccharid) enthält und allein in Futtermitteln oder in Abmischung mit anderen Futtermittelzusatzstoffen in der Nutztieraufzucht angewendet werden kann.

Im Bereich der Tierfutter werden häufig Antibiotika als Leistungsförderer verwendet. Die Anwendung von Antibiotika in diesem Bereich steht im Verdacht für Gefahren, welche von resistenten Bakterien ausgehen, die auch die menschliche Gesundheit langfristig gefährden können, verantwortlich zu sein. Daher müssen gesundheitlich weniger bedenkliche Produkte für diesen Einsatzzweck gesucht werden. So werden auch in anderen Bereichen zunehmend physiologisch und epidemiologisch gesundheitlich bedenkliche oder aber für die Umwelt schädliche Substanzen, wie beispielsweise Antibiotika, formaldehydabspaltende Stoffe, halogenierte Substanzen, u.v.a.m. beispielsweise in Lebensmitteln, Futtermitteln, Haustierfutter, Silagen, Trester, oder anderen Abfällen aus der Lebensmittelindustrie, durch weniger bedenkliche Stoffe ersetzt. Der Zweck dieser Stoffe ist zum einen auf die Werterhaltung des eigentlichen Produktes gerichtet. Zum anderen aber soll auch deren hygienischer Zustand verbessert werden bzw. eine verlängerte Haltbarkeit erzielt werden.

Es ist bekannt, dass Sorbinsäure zur Konservierung von Futtermitteln eingesetzt werden kann. Sorbinsäure (trans,trans-2,4-Hexadiensäure) ist eine farblose, feste Verbindung, die sich nur wenig in kaltem Wasser löst und weltweit als Konservierungsstoff verwendet wird. Das Wirkprinzip wird durch die Sorbinsäure in undissoziierter Form bestimmt. Die beste Wirkung entfaltet Sorbinsäure daher im sauren pH-Bereich. Sorbinsäure und seine Salze besitzen eine sehr gute mikrobiostatische, antimykotische Wirkung. Gleichzeitig ist Sorbinsäure als ungesättigte Fettsäure praktisch ungiftig, was sehr umfangreiche Daten belegen und durch die jahrzehntelange Anwendung dieser Säure im Lebensmittelbereich, in Tierfuttern u.a. belegt ist.

Neben Sorbinsäure werden auch andere organische Säuren seit Jahren zur Konservierung von Futtermitteln und zur Verbesserung der Futterhygiene eingesetzt. Gerade im Futter für Jungtiere sind an die hygienische Qualität besondere Anforderungen zu stellen. Daher sind einige organischen Säuren als Futterzusatzstoffe, basierend auf den nationalen futtermittelrechtlichen Bestimmungen ohne Höchstmengenbegrenzung zugelassen.

Die Verwendung von Oligosacchariden zur Leistungssteigerung in der Nutztieraufzucht ist bereits verschiedentlich untersucht worden, wobei positive Effekte bei der Gewichtszunahme und der Futterverwertung festgestellt wurden (Beck, M. et al., Tagungsband 6. Tagung Schweine- und Geflügelernährung, 2000, Seiten190-192; Bolduan et al., DGS MAGAZIN, Woche 48/99, Seiten 39-40).

Insgesamt nachteilig an den bisher bekannten Futtermittelzusätzen auf Säurebasis war, dass sie relativ instabil sind. Die zum Säuern geeigneten Säuren sind zum Teil flüchtig, riechen unangenehm und wirken darüber hinaus korrosiv. Die mit ihnen erreichbaren leistungsfördernden Effekte gehen mit erheblichen Nachteilen in der Handhabung einher. Diese Säuren wirken aber korrosiv und verursachen auf Grund ihrer Flüchtigkeit z. T. Geruchsbelästigungen und erfordern besondere Vorsicht im Umgang, wenn das Risiko einer aus Sicht des Gesundheitsschutzes unerwünschten inhalatorischen Aufnahme vermieden werden soll. Es bestand demnach die Aufgabe, einen einfach zu handhabenden und möglichst leistungsfördernden Zusatz zur Verfügung zu stellen, der diese Nachteile nicht aufweist.

Gelöst wird diese Aufgabe durch ein Präparat (Zusammensetzung), welches Sorbinsäure sowie mindestens ein NDS enthält.

Unter NDS werden nicht verdauliche Stoffe verstanden, die im tierischen Organismus in den natürlicherweise nicht von Mikroorganismen besiedelten Abschnitten des Verdauungstraktes unverdaut bleiben, die aber in den von Mikroorganismen besiedelten Teilen des Verdauungstraktes abgebaut werden können und somit gezielt das Wachstum und/oder die Aktivität von einer oder mehreren Gruppen von Mikroorganismen im Darmtrakt in einem Ausmaß steigern, dass positive Effekte auf den Tierorganismus resultieren. Die erfindungsgemäß verwendeten NDS weisen Kettenlängen von 2-80, vorzugsweise 2-20, auf. Unter den Begriff NDS fallen weiterhin verschiedene Polysaccharide wie resistente Stärken, ß-Glukane, Hemizellulosen, Pektine, Mannane wie Galaktomannane, Glukomannane, Galaktoglucomannane, Xylane wie Arabinoxylane, Galaktane wie Arabinogalaktane und Pflanzengummis, wobei diese ebenfalls das Wachstum von Mikroorganismen im Darmtrakt fördern können. Anstelle der reinen NDS im Sinne der obigen Definition können auch Futtermittelbestandteile verwendet werden, in denen diese NDS zu mindestens 25 Gew-% enthalten sind, sowie insbesondere Produkte, in denen diese NDS auf über 25 Gew-% angereichert sind. Beispiele hierfür sind Hefeextrake, Zellbestandteile von Mikroorganismen, Kleie(fraktionen), Pressrückstände der Obst- und Gemüseverarbeitung oder Presskuchen der Ölgewinnung und Faserextrakte aus dem Fruchtfleisch des Johannisbrotbaumes (Ceratonia siliqua).

Beispiele für erfindungsgemäß einsetzbare NDS sind:
Fructooligosaccharide, welche beispielsweise aus Saccharose hergestellt werden;
Inulin, welches beispielsweise aus Zichorie, Topinambur, Zwiebeln, Lauch, Artischocken, Banane und Weizen gewonnen wurde;
Oligofruktosen, welche beispielsweise durch enzymatische Hydrolyse aus Inulin hergestellt wurden;
Galaktooligosaccharide, Transgalaktosyloligosaccharide, welche aus Laktose hergestellt werden können;
Oligosaccharidmischungen z. B aus Sojabohnen;
Xylooligosaccharide z. B. aus Maiskolben;
Laktulose aus Laktose;
Laktosaccharose aus Laktose und Saccharose;
Glukooligosaccharide, Isomaltooligosaccharide aus Saccharose und/oder Maltose;
Gentiooligosaccharide aus Glukosesirup;
Stärkehydrolysate, welche Isomaltooligosaccharide und/oder Maltooligosaccharide enthalten.

Zu den o.g. NDS zählen ebenso Futtermittelbestandteile, wenn sie diese NDS in Anteilen von mindestens 25 Gew.-% enthalten.

Die NDS sind in den erfindungsgemäßen Präparaten in Mengen von 90-10 Gew.-%, bevorzugt 70-30 Gew.-%, vorhanden.

Das erfindungsgemäße Präparat enthält 10 - 90 Gew.-%, bevorzugt 30 - 70 Gew.-%, Sorbinsäure.

Als Tierfuttermittel geeignet sind z. B. Grünfutter, Silagen, Trockengrünfutter, Wurzeln, Knollen, fleischige Früchte, Körner und Samen, Biertreber, Trester, Bierhefe, Destillationsschlempe, Müllereinebenerzeugnisse, Nebenerzeugnisse der Zucker-, Stärkeherstellung und Ölgewinnung und verschiedene Lebensmittelabfälle. Solchen Futtermitteln können bestimmte Futtermittelzusatzstoffe (z. B. Antioxidantien) oder Mischungen aus verschiedenen Substanzen (z. B. Mineralstoffmischungen, Vitaminmischungen) zur Verbesserung beigegeben werden. Spezielle Futtermittel werden auch für bestimmte Tierarten und deren Entwicklungsstadium angepasst. Dies ist beispielsweise in der Ferkelaufzucht der Fall. Hier werden Saugferkelfutter und Ferkelaufzuchtfutter verwendet. Das erfindungsgemäße Präparat kann direkt dem Tierfuttermittel bzw. auch in Abmischung mit anderen Futtermittelzusatzstoffe oder aber über Vormischungen dem eigentlichen Futtermittel zugegeben werden. Das Präparat kann trocken dem Futter zugemischt werden, vor einer weiteren Verarbeitung (z. B. Extrusion) zugegeben werden bzw. im Gemisch dispergiert zudosiert werden. Darüber hinaus können auch die Einzelbestandteile des Präparats getrennt dem Futtermittel zugegeben werden. Für diese Zwecke werden zweckmäßigerweise Präparat-Konzentrationen zwischen 0,2 und 5,0 Gew.-% (bezogen auf das Futter), bevorzugt 1,0 - 3,0 Gew.-%, angewendet.

Das erfindungsgemäße Präparat wird hergestellt, indem man beispielsweise die Sorbinsäure und das feste oder pastöse NDS mechanisch durchmischt. Ebenso ist es möglich, Sorbinsäure und die NDS getrennt zur Verfügung zu stellen - insbesondere wenn sirupöse oder flüssige Zubereitungen von NDS vorliegen - und diese nacheinander gleichmäßig in das Futtermittel einzumischen.

Das Präparat kann als alleiniger Zusatzstoff zu Tierfuttermitteln, beispielsweise für die Kälber- oder Lämmeraufzucht, besonders bevorzugt zu Saugferkelfutter (Prestarter) und Ferkelaufzuchtfutter (Starterfutter), zugegeben werden oder in Abmischung mit anderen Futtermittelzusatzstoffen für diese Tiere angewendet werden.

Überraschenderweise zeigen die erfindungsgemäßen Präparate die oben beschriebenen Nachteile nicht. Die Präparate zeigen vielmehr gute Eigenschaften in der Handhabung. Durch den Abbau dieser NDS, die nicht unmittelbar verdaulich sind, zu kurzkettigen Säuren wird eine Verbesserung der hygienischen Bedingungen im Darmtrakt der Tiere erreicht und ein Wachsen unerwünschter Keime zurückgedrängt. Zudem kann überraschenderweise auch ein positiver Einfluss auf die Wachstumsleistung von jungen Tieren festgestellt werden.

Durch die selektive Zugabe zum Tierfutter erhalten die Zielorganismen einen Vorteil gegenüber allen anderen Bakterien. Die Zielorganismen, oft Milchsäure bildende Arten, werden signifikant in ihrem Wachstum gefördert und fördern beeinflussend die Gesundheit der Tiere in positiver Weise.

Überraschenderweise wurde gefunden, dass schon durch Zusatz geringer Mengen erfindungsgemäßer Präparate in der Ferkelaufzucht eine deutliche Leistungsverbesserung hinsichtlich Zuwachsrate und Futterverwertung erreicht werden kann. Zur Sicherung einer signifikanten leistungsfördernden Wirksamkeit ist eine Mindestmenge an Sorbinsäure von 0,1 Gew.-%, vorzugsweise mindestens 0,5 Gew.-%, und eine Mindestmenge an NDS von 0,1 Gew.-%, vorzugsweise 0,3 Gew.-%, bezogen auf das Futter, zweckmäßig. Weiterhin eignen sich Futtermittel mit dem erfindungsgemäßen Präparat als Milchaustauscher bei der Frühentwöhnung von Sauglämmern oder Kälbern.

Durch die Anwesenheit der NDS wird das Wachstum vieler probiotischer Mikroorganismen zusätzlich gefördert. Durch den verbreiteten Abbau der NDS erlangen diese Organismen einen zusätzlichen Vorteil. Deshalb kann es vorteilhaft sein, den erfindungsgemäßen Präparaten auch Probiotika zuzusetzen.

Unter Probiotika sollen lebensfähige Formen von Mikroorganismen oder Sporen verstanden werden, die dem Tier kontinuierlich mit dem Futter zugeführt werden können. Es handelt sich dabei um ausgewählte Hefestämme oder Milchsäurebakterien (morphologisch uneinheitliche grampositive, unbewegliche und katalasenegative Bakterien wie Streptococcacaeae einschließlich der Bakterien der Gattung Enterococcus, Lactobacillaceae, Bacillaceae oder Actinomycetaceae). Es handelt sich dabei um Stämme, die besonders säureresistent sind. Bei Sporenbildnern werden die Sporen als Futterzusatzstoff verwendet.

Bevorzugt werden folgende Mikroorganismen oder Kombinationen daraus:
Bacillus cereus
(besonders Bacillus cereus var. toyoi)
Bacillus clausii.
Bacillus licheniformis
Bacillus subtilis
Bifidobacterium bifidum
Bifidobacterium breve
Bifidobacterium infantis
Bifidobacterium lactis
Bifidobacterium longum
Bifidobacterium adolescentis
Enterococcus faecium
Enterococcus mundtii
Lactobacillus acidophilus
Lactobacillus amylovorus
Lactobacillus bulgaricus
(besonders Lactobacillus delbrueckii subsp. bulgaricus)
Lactobacillus casei
Lactobacillus crispatus
Lactobacillus farciminis
Lactobacillus gallinarum
Lactobacillus gasseri
Lactobacillus johnsonii
Lactobacillus paracasei
Lactobacillus plantarum
Lactobacillus reuteri
Lactobacillus rhamnosus
Lactobacillus salivarius
Pediococcus acidilactici
Saccharomyces cerevisiae
Streptococcus infantarius
Streptococcus thermophilus
(besonders Streptococcus salivarius subsp. thermophilus).

Die Mikroorganismen oder Kombinationen derselben können den erfindungsgemäßen Präparaten in Mengen zugesetzt werden, die 10⁷ bis 10¹⁰, vorzugsweise 0,1 - 50 x 10⁹ KBE(Kolonie bildende Einheiten) an insbesondere lebensfähigen Mikroorganismen je kg Futtermittel entsprechen.

Sofern das erfindungsgemäße Präparat Probiotika enthält, kann dieses hergestellt werden, indem man eine Sporen enthaltende Mikroorganismenkultur, gegebenenfalls immobilisiert auf einem Träger oder verkapselt, und die übrigen Bestandteile des Präparates gleichmäßig durchmischt. Im Falle lebender Kulturen stellt man die Mikroorganismen gegebenenfalls immobilisiert auf einem Träger oder verkapselt und die übrigen Bestandteile getrennt zur Verfügung und mischt sie nacheinander gleichmäßig in das Futtermittel ein. Die Immobilisierung der Mikroorganismen kann beispielsweise durch Aufsprühen von Kulturlösungen auf entsprechende Träger erfolgen. Für die Verkapselung eignet sich beispielsweise Gelatine, Polysaccharide aber auch die erfindungsgemäß eingesetzten NDS.

Die Erfindung wird nachfolgend anhand von Beispielen erläutert:

Um die wachstumsstabilisierenden Wirksamkeit der Sorbinsäure in Kombination mit einem NDS bzw. mit Sorbinsäure einem NDS und einem zusätzlich zugesetztem Probiotikum zu untersuchen, wurden Versuche an Ferkeln durchgeführt, die zu Versuchsbeginn ein Alter von 28 Tagen und eine mittlere Lebendmasse von 8,9 kg aufwiesen. Zu Versuchsbeginn (3 Tage nach Einstallung) wurden die Ferkel nach dem Zufallsprinzip unter Berücksichtigung von Abstammung, Lebendmasse und Geschlecht in 5 Versuchsgruppen zu je 12 Tieren eingeteilt. Jeweils 8 Tiere eines Wurfes bildeten einen Block, in dem die Behandlungen den Tieren zufällig zugeordnet wurden. Das Versuchsdesign entsprach damit einer vollrandomisierten Blockanlage. Die Aufstallung der Ferkel erfolgte in Einzelbuchten einer Flat-Deck-Anlage.

Zur Untersuchung der nutritiven Wirksamkeit der verschiedenen Wirkstoffgruppen wurde folgende Gruppeneinteilung vorgenommen:

| Gruppe | Zusatz zum Futter |
|---|---|
| A | Negativkontrolle, keine Zulage |
| B | 0,875 % Sorbinsäure + 0,03 g/kg Oralin® (entspr. ca. 1,05 x 10⁹ KBE/kg) |
| C | 0,875 % Sorbinsäure + 0,5 % FOS (Fructooligosaccharid) |
| D | 0,03 g/kg Oralin® + 0,5 % FOS |
| E | 0,875 % Sorbinsäure + 0,03 g/kg Oralin® + 0,5 % FOS |

Bei dem in den Versuchen verwendeten FOS (Fructooligosaccharid) handelt es sich um ein durch enzymatische Umwandlung von Rübenzucker standardisiertes Präbiotikum mit der Struktur α-D-Glu [-(1→2)-β-D-Fru]ₙ, wobei n = 2 mit 37 ± 6 %, n = 3 mit 53 ± 6 % und n = 4 mit 10 ± 6 % vertreten sind (Handelsbezeichnung: "Anta-Sweet 295", Vertrieb: Fa. Dr. Eckel GmbH, 56651 Niederzissen).
Das verwendete Probiotikum "Oralin®" (Vertrieb: Bayer Chemie Service GmbH, 51063 Köln) enthält die Keime von Enterococcus faecium (DSM 10663; NCIMB 10415) in einer Aktivität von 3,5 x 10¹⁰ KBE/g, das in Form eines Mikrogranulats eingesetzt wurde.

Die Einmischung dieser Zusatzstoffe in das Basisfutter erfolgte durch Variation des Maisstärke- und Sojaölanteils protein- und energieäquivalent, so dass die Versuchsfutter in nutritiver Hinsicht gleichwertig zusammengesetzt waren. In Tabelle 1 ist die Zusammensetzung der verwendeten Basis-Futtermischungen angegeben. Es wurden in diesem Versuch aufeinanderfolgend zwei verschiedene Futtertypen verwendet. Im ersten 21tägigen Abschnitt bis ca. 18 kg Lebendmasse wurde ein sog. Prestarter entsprechend dem Standard eines Ergänzungsfutters für Saugferkel und im zweiten 17tägigen Abschnitt bis Versuchsende ein sog. Ferkelaufzuchtfutter (Standard: Alleinfutter für Ferkel) eingesetzt.

Die mehlförmigen Futtermischungen wurden zur freien Aufnahme vorgelegt. Die Futtervorlage erfolgte täglich, nicht verzehrtes Futter wurde zweimal wöchentlich zurückgewogen. Trinkwasser stand über Selbsttränken unbegrenzt zur Verfügung. Als Versuchskriterien wurden die Gewichtsentwicklung, tägliche Zuwachsrate, Futteraufnahme und Futterverwertung (Futteraufnahme in g/g Gewichtszunahme) erfasst. Die mathematisch-statistische Auswertung der Versuchsdaten wurde für die gesamte Versuchsperiode sowie für jeden Versuchsabschnitt getrennt mit Hilfe der Varianzanalyse vorgenommen.

In der gesamten Aufzuchtperiode wurden die in Tabelle 2 zusammengefassten Ergebnisse erzielt.

Der kombinierte Zusatz von Sorbinsäure mit FOS ergab um 5,5 % und der Zusatz von Sorbinsäure mit Oralin um 4,9 % höhere Endgewichte im Vergleich zu Tieren ohne diese Zusätze im Futter. Wurden nur Oralin mit FOS zusammen verabreicht, waren keine erhöhten Endgewichte zu beobachten, während die Kombination Sorbinsäure + Oralin + FOS diese um 5,7 % steigern konnte. Damit zeigt sich erfindungsgemäße Wirkung auf die Gewichtsentwicklung der Ferkel bei einem Zusatz von NDS mit Sorbinsäure bzw. bei der Kombination des NDS/Sorbinsäurezusatzes mit einem Probiotikum. Entsprechend dazu verhielt sich die tägliche Zuwachsrate, der kombinierte Einsatz von Sorbinsäure + Oralin bzw. Sorbinsäure + FOS führte zu 6,3 % bzw. 5,9 % erhöhten Wachstumsraten. Ohne Sorbinsäure im Futter war keine wachstumsfördernde Wirkung festzustellen, wenn Oralin + FOS gemeinsam verfüttert wurden. Die Kombination von Sorbinsäure + Oralin + FOS hingegen steigerte den Zuwachs erfindungsgemäß stark um 7,7 %. Wurde Sorbinsäure mit Oralin bzw. FOS zusammen eingesetzt (Gruppe B bzw. C), dann war die Futterverwertung signifikant auf 1,59 bzw. 1,57 g/g verbessert (6,0 % bzw. 7,1 % gegenüber der Negativkontrolle). Nur sehr wenig auf 1,66 g/g (1,8 %) wurde der Futteraufwand gesenkt bei gleichzeitiger Zufuhr von Oralin + FOS (Gruppe D). Die Kombination von Sorbinsäure + Oralin + FOS (Gruppe E) ergab eine Futterverwertung von 1,56 g/g, die um 7,7 % signifikant günstiger war als in der Negativkontrolle und damit von allen getesteten Varianten am besten abschnitt.

Werden die Versuche insgesamt beurteilt, so lässt sich feststellen, dass mit dem kombinierten Einsatz von FOS und Oralin, also einem NDS und Probiotikum nur geringe bis keine wachstumsstabilisierenden Effekte festzustellen sind. Bei der Kombination von Sorbinsäure mit FOS (NDS) werden wesentlich höhere Zuwachsraten und eine bessere Futterverwertung der Tiere erreicht. Dies trifft auch auf die erfindungsgemäße Kombination von FOS (NDS) und Oralin (als Probiotikum) zu.

**Tabelle 1:**

| Zusammensetzung der verwendeten Futtermittel (%) | | |
|---|---|---|
| Komponente | Prestarter | Ferkelaufzuchtfutter |
| Mais | 30,0 | 21,25 |
| Weizen | 29,03 | 20,00 |
| Gerste | - | 25,0 |
| Sojaextraktionsschrot | 15,23 | 27,34 |
| Magermilchpulver | 14,00 | - |
| Kartoffeleiweißpulver | 5,00 | - |
| Maisstärke | 1,70 | 1,70 |
| Sojaöl | 1,53 | 1,11 |
| L-Lysin · HCI | 0,05 | 0,23 |
| DL-Methionin | 0,03 | 0,04 |
| L-Threonin | - | 0,04 |
| Mineralfutter, vit. | 3,43 | 3,29 |

| Nährstoffanalyse (g/kg) | | |
|---|---|---|
| Rohprotein | 211 | 186 |
| ME, MJ/kg | 13,95 | 13,2 |
| Lysin | 12,5 | 11,0 |
| Methionin + Cystein | 7,5 | 6,6 |
| Threonin | 8,6 | 7,3 |
| Tryptophan | 2,5 | 2,2 |
| Calcium | 9,8 | 8,5 |
| Phosphor | 7,3 | 6,0 |
| Natrium | 2,3 | 1,8 |

**Tabelle 2:**

| Wachstumsparameter von Ferkeln bei Einsatz von Sorbinsäure, eines Pro- oder Präbiotikums sowie Kombinationen dieser Zusätze | | | | | |
|---|---|---|---|---|---|
| Gruppe | A | B | C | D | E |
| Sorbinsäure, % | - | 0,875 | 0,875 | - | 0,875 |
| Probiotikum | - | Oralin® | - | Oralin® | Oralin® |
| Präbiotikum | - | - | FOS | FOS | FOS |
| Anfangsgewicht, kg | 8,80 | 8,97 | 9,19 | 8,89 | 8,89 |
| | ±1,18 | ±1,37 | ±1,32 | ±1,05 | ±1,26 |
| | | | | | |
| **Endgewicht**, kg | 29,94 | 31,42 | 31,58 | 30,09 | 31,64 |
| | ±3,65 | ±3,42 | ±3,64 | ±3,05 | ±4,73 |
| **relativ** | **100** | **104,9** | **105,5** | **100,5** | **105,7** |
| | | | | | |
| Zuwachsrate, g/d | 556 | 591 | 589 | 558 | 599 |
| | ±77 | ±64 | ±71 | ±82 | ±101 |
| relativ | 100 | 106,3 | 105,9 | 100,4 | 107,7 |
| | | | | | |
| Futterverzehr, g/d | 939 | 937 | 927 | 924 | 933 |
| | ±115 | ±115 | ±112 | ±149 | ±158 |
| relativ | 100 | 99,8 | 98,7 | 98,4 | 99,4 |
| | | | | | |
| **Futteraufwand** | 1,69^{a} | 1,59^{bc} | 1,57^{bc} | 1,66^{ab} | 1,56^{c} |
| je g Zuwachs, g | ±0,05 | 0,08 | ±0,05 | ±0,11 | ±0,07 |
| **relativ** | **100** | **94,0** | **92,9** | **98,2** | **92,3** |

## Patentansprüche

1. Präparat, welches Sorbinsäure und mindestens ein NDS (Non Digestible Saccharid) enthält.

2. Präparat nach Anspruch 1, **dadurch gekennzeichnet, dass** das Präparat mindestens 10 Gew.-% Sorbinsäure enthält.

3. Präparat nach Anspruch 1 oder 2, **dadurch gekennzeichnet, dass** es 10 bis 90 Gew.-% Sorbinsäure (bezogen auf das Präparat) enthält.

4. Präparat nach einem der Ansprüche 1 bis 3, **dadurch gekennzeichnet, dass** es 90 bis 10 Gew.-% (bezogen auf das Präparat), NDS enthält.

5. Präparat nach einem oder mehreren der Ansprüche 1 bis 4, **dadurch gekennzeichnet, dass** das NDS ausgewählt wird aus einem oder mehreren der folgenden Stoffe
- Fructooligosaccharide
- Inulin
- Oligofruktosen
- Galaktooligosaccharide
- Transgalaktosyloligosaccharide
- Oligosaccharidmischungen
- Xylooligosaccharide
- Laktulose
- Laktosaccharose
- Glukooligosaccharide
- Isomaltooligosaccharide
- Gentiooligosaccharide
- Stärkehydrolysate, welche Isomaltooligosaccharide und/oder Maltooligosaccharide enthalten.

6. Präparat nach einem der Ansprüche 1 bis 5, **dadurch gekennzeichnet, dass** es zusätzlich mindestens ein Probiotikum enthält.

7. Präparat nach Anspruch 6, **dadurch gekennzeichnet, dass** das Probiotikum oder die Probiotika in 10⁷ bis 10¹⁰ KBE (Kolonie bildende Einheit) enthalten sind.

8. Futtermittel, **dadurch gekennzeichnet, dass** es ein Präparat nach Anspruch 1 enthält.

9. Futtermittelzusatz, **dadurch gekennzeichnet, dass** es ein Präparat nach Anspruch 1 enthält.

10. Futtermittel nach Anspruch 8, **dadurch gekennzeichnet, dass** es 0,2 bis 5,0 Gew.-% (bezogen auf das Futtermittel) des Präparates enthält.

11. Verwendung des Präparates nach Anspruch 1 als Tierfutter- oder Futtermittelzusatz.

12. Verwendung nach Anspruch 11 in der Schweineaufzucht.

13. Verwendung nach Anspruch 11 in der Rinderaufzucht.

14. Verwendung nach Anspruch 11 in der Lämmeraufzucht.

15. Verwendung nach Anspruch 11 in der Geflügelaufzucht.
